Europäisches Patentamt

European Patent Office

Office européen des brevets

(11) Veröffentlichungsnummer: **0 328 965**

**A2**

(12) **EUROPÄISCHE PATENTANMELDUNG**

(21) Anmeldenummer: **89101878.0**

(22) Anmeldetag: **03.02.89**

(51) Int. Cl.⁴: **C08J 7/04**

(30) Priorität: **13.02.88 DE 3804536**

(43) Veröffentlichungstag der Anmeldung:
**23.08.89 Patentblatt 89/34**

(84) Benannte Vertragsstaaten:
**BE DE FR GB IT**

(71) Anmelder: **BAYER AG**

**D-5090 Leverkusen 1 Bayerwerk(DE)**

(72) Erfinder: **Stahlke, Kurt-Rainer, Dr.**
**Amselweg 7**
**D-5067 Kuerten 2(DE)**
Erfinder: **Reinking, Klaus, Dr.**
**Robert-Stolz-Strasse 16 b**
**D-5632 Wermelskirchen 1(DE)**
Erfinder: **Tresper, Erhard, Dr.**
**Moerser Strasse 394**
**D-4150 Krefeld 11(DE)**
Erfinder: **Kraft, Klaus, Dr.**
**Doerperhofstrasse 15**
**D-4150 Krefeld 1(DE)**
Erfinder: **Kaminski, Axel**
**Markusmuehle 2**
**D-5632 Wermelskirchen 2(DE)**

(54) **Zweikomponentenspritzguss mit Polyarylensulfiden.**

㊿ Die Erfindung betrifft Zweikomponentenspritzguß-Formkörper, in denen Polyarylensulfide (PAS), vorzugsweise Polyphenylensulfid (PPS) als mindestens eine Komponente enthalten sind, sowie ein Verfahren zu deren Herstellung.

EP 0 328 965 A2

## Zweikomponentenspritzguß mit Polyarylensulfiden

Die Erfindung betrifft Zweikomponentenspritzguß-Formkörper, in denen Polyarylensulfide (PAS), vorzugsweise Polyphenylensulfid (PPS) als mindestens eine Komponente enthalten sind, sowie ein Verfahren zu deren Herstellung.

Verfahren und Technik des Zweikomponentenspritzgusses sind bekannt (z.B. DE-OS 2 353 816, 3 504 816, US-PS 3 479 425). Beim Zweikomponentenspritzguß können die beiden thermoplastischen Komponenten, die gleich oder verschieden sein können, unmittelbar nacheinander (z.B. im zeitlichen Abstand von weit weniger als einer Sekunde) in eine Form gespritzt werden. In einer besonderen Ausführungsform können die Komponenten auch im Schaumspritzverfahren verarbeitet werden (z.B. Kunststoffberater 1/2, 1983, S 26 - 32).

Durch Zweikomponentenspritzguß können Formkörper hergestellt werden, die aus zwei Schichten übereinanderliegender Thermoplaste bestehen. Eine Komponente bildet den Kern des Formkörpers, die andere Komponente (Hülle) umhüllt der Kern. Der Kern kann auch ausgeschäumt werden (in mould injection). Gegenüber im Einkomponentenspritzguß (1k) hergestellten Formkörpern haben im Zweikomponentenspritzguß (2K) hergestellte Formkörper z.B. bessere Oberflächenqualitäten.

Im allgemeinen übernimmt der Kern des Formkörpers die Funktion der Formgebung, d.h. Steifigkeit, Dimensionsstabilität (z.B. bei hoher Temperatur). Die Hülle übernimmt die Funktion für die Oberflächenqualität (z.B. glatte, reflektierende Oberfläche). Die Oberfläche sollte z.B. gut lackierbar und bedampfbar oder metallisierbar sein.

Es wurde nun gefunden, daß Polyarylensulfide sich aufgrund ihrer mechanischen und thermischen Eigenschaften besonders gut eignen, um im Zweikomponentenspritzguß verarbeitet zu werden.

Gegenstand der Erfindung sind daher Zweikomponentenspritzguß-Formkörper, dadurch gekennzeichnet, daß sie als mindestens eine Komponente ein Polyarylensulfid, vorzugsweise Polyphenylensulfid enthalten.

Ein weiter Gegenstand der Erfindung ist ein Verfahren zur Herstellung von Formkörpern durch Zweikomponentenspritzguß, dadurch gekennzeichnet, daß als mindestens eine mögliche Komponente ein Polyarylensulfid, vorzugsweise Polyphenylensulfid, eingesetzt wird.

Erfindungsgemäß verwendbare Polyarylensulfide sind bekannt und handelsüblich, z.B. US-PS 3 354 129, EP-OS 171 021.

Erfindungsgemäß verwendbare Polyarylensulfide haben eine Schmelzviskosität von 5-300 Pa.s/306° ●$10^3$ sec$^{-1}$, gemessen im Weißenberg Rheogoniometer. Sie können amorph und (teil)kristallin sein. Die Polyarylensulfide können gefüllt und ungefüllt eingesetzt werden. Sie können als Komponente für den Kern des Spritzgußkörpers und/oder die Hülle des Formkörpers verwendet werden. Für den Kern werden vorzugsweise hochgefüllte (teil)kristalline Polyarylensulfide eingesetzt.

Erfindungsgemäß zu verarbeitendes Polyarylensulfid, kann z.B. mit Zusatzstoffen wie Glasfasern wie Kurzglasfasern, Langglasfasern, E-Glas, Glasperlen, Glaskugeln, die alle gegebenenfalls geschlichtet (z.B. mit Epoxisilanen oder Aminosilanen) sein können, und/oder mit mineralischen Füllstoffen wie Quarz, Glimmer, Kreide, Crystobalit, Talkum, Dolomit, Kaolin, Feldspat, Wollastonit, Schwerspat (BaSO₄), Metallpulvern, Metalloxiden, z.B. TiO₂, Metallsalzen, Ruß, Graphit, Kohlefasern, Pigmenten u.s.w. gefüllt sein.

Weiterhin können dem erfindungsgemäß zu verarbeitenden Polyphenylensulfid übliche Stabilisatoren, Pigmente und übliche Entformungsmittel wie Fettssäureester, Montanwachs, Silicon, Säureamide, Metallstearate u.s.w. zugemischt werden.

Bei der erfindungsgemäßen Verwendung von Polyarylensulfid, vorzugsweise Polyphenylensulfid, kann ein Spritzgußkörper hergestellt werden, bei dem das Polyarylensulfid den Kern bildet, der von der zweiten Komponente umhüllt wird. Es kann auch ein Spritzgußkörper hergestellt werden, bei dem das Polyarylensulfid die Umhüllung bildet und eine zweite Komponente den Kern bildet. Weiterhin können auch Formkörper hergestellt werden, bei denen sowohl der Kern als auch die Hülle aus einem Polyarylensulfid besteht.

Als weitere Komponente können neben Polyarylensulfiden (teil)kristalline und amorphe Thermoplaste eingesetzt werden.

Als (teil)kristalline Thermoplaste können z.B. PPS, Polyamide, Polyester wie Polybutylenterephthalate (PBT), Polyethylenterephthalate (PETP) oder Mischungen daraus, Liquid Crystal Polymere (LCP), Polyetherketone (PEK), Polyetheretherketone (PEEK) usw. verwendet werden.

Als amorphe Thermoplaste können z.B. spezielle Polyarylensulfide, Polycarbonate, Polyestercarbonat (PAR), Polyetherimid (PEI), Polysulfon (PSU) usw. eingesetzt werden.

Der für die äußere Schicht eingesetzte Thermoplast (Oberfläche) ist mit 0 - 70 Gew.-% Füllstoffen abgemischt, vorzugsweise 0 - 10 Gew.-%), er kann amorph oder (teil)kristallin sein.

Der für den Kern eingesetzte Thermoplast ist mit 0-80 Gew.-% vorzugsweise mit 30 bis 70 Gew.-

% Füllstoffen abgemischt. Er ist vorzugsweise (teil)kristallin.

Dabei sollten die erfindungsgemäß zu verarbeitenden Thermoplaste aufeinander bezüglich ihrer Verarbeitbarkeit abgestimmt und verträglich sein.

Die erfindungsgemäßen, im Zweikomponenten Spritzguß hergestellten Formteile zeigen eine gute Verbundhaftung zwischen Mantel (Außenschicht) und Kern.

Sie neigen wenig zu Durchbrüchen zwischen den Schichten. Außerdem sind diese Formteile gegenüber rasch wechselnden Temperatureinflüssen wenig empfindlich, Delaminierungen können nicht beobachtet werden. Sie zeigen wenig Ausgarung und können daher z.B. gut bedampft, bedruckt, metallisiert oder lackiert werden und besitzen einen hohen Oberflächenglanz.

Im Zweikomponentenspritzguß können hochbeanspruchbare Teile hergestellt werden die z.B. als Reflektoren für Scheinwerfer(z.B. Kraftfahrzeugscheinwerfer) als Gehäuse für technisches Gerät z.B. Büromaschinen, elektronische Bauteile, Leiterplatten usw. verwendet werden.

Vorzugsweise können im erfindungsgemäßen Zweikomponentenspritzguß Scheinwerferreflektoren (z.B. für Automobile) hergestellt werden. Vorzugsweise wird der Reflektor so hergestellt, daß das Polyphenylensulfid den Kern bildet und ein anderer Thermoplast, vorzugsweise Polycarbonat die Hülle. Es können so sehr schmale Scheinwerfer erzeugt werden, die eine hohe Temperaturbeständigkeit haben und unempfindlich gegenüber Temperatursprüngen (z.B. durch Einfluß von Spritzwasser) sind und eine hohe mechanische Belastbarkeit sowie excellente Oberflächen aufweisen.

Ausführungsbeispiel 1 (Vergleich mit Einkomponenten-Spritzguß)

In einer konventionellen Spritzgußmaschine wird z.B. ein Polyphenylensulfid gemäß EP-OS 171 021 mit 45 Gew.-% handelsüblichen Glasfasern (10-15 μ Durchmesser) compoundiert. Das Material weist eine Viskosität von $\eta$ = 1,3x10² Pa.s bei einer Schergeschwindigkeit von $\dot{\gamma}$ = 10³ • sec⁻¹ auf, gemessen bei 320° C. Es werden darauf Reflektoren für den KfZ-Bereich durch konventionelles Spritzgießen hergestellt. Nach anschließender Vakuummetallisierung (z.B. mit Aluminium) zeigt der Reflektor eine rauhe Oberfläche, die beim Einsatz für Autoscheinwerfer nicht geeignet ist.

Ausführungsbeispiel 2

Mit einer Battenfeld 2 K Spritzgußmaschine der Baureihe BM-T wird ein unter Beispiel 1 beschriebenes Compound als Kern eingesetzt. Als Außenhaut wird ein Polycarbonat (Makrolon 2805) eingesetztt. Die erhaltenen Reflektoren lassen sich problemlos metallisieren (z.B. mit Aluminium) und weisen eine ausgezeichnete Oberflächenqualität auf. Aufgrund ihrer Dimensionsstabilität können sie auch über lange Zeit verwendet werden, ohne daß z.B. die Hell-Dunkel-Grenze des aus dem Reflektor hergestellten Scheinwerfers wesentlich verschoben wird.

Ausführungsbeispiel 3

Als Kern wird ein PPS-Compound gemäß Beispiel 1 eingesetzt. Als Außenhaut wird ein PPS, das 30 Gew.-% Dolomit mit einer Teilchengröße von 1-2 μm enthält, eingesetzt. Dieses Compound hat eine Viskosität von $\eta$ = 8.10² Pa.s bei einer Schergeschwindigkeit von $\dot{\gamma}$ = 10³•sec⁻¹, gemessen bei 320° C. Die daraus hergestellten Reflektoren lassen sich direkt bedampfen, sie weisen eine ausgezeichnete Oberflächenqualität auf.

**Ansprüche**

1. Zweikomponentenspritzguß-Formkörper, dadurch gekennzeichnet, daß sie als mindestens eine Komponente ein Polyarylensulfid enthalten.

2. Formkörper nach Anspruch 1, dadurch gekennzeichnet, daß sie im Kern ein Polyarylensulfid enthalten.

3. Formkörper nach Anspruch 1, dadurch gekennzeichnet, daß sie in der Hülle ein Polyarylensulfid enthalten.

4. Formkörper nach Anspruch 1, dadurch gekennzeichnet, daß sie in Hülle und Kern ein Polyarylensulfid enthalten.

5. Zweikomponentenspritzgußverfahren zur Herstellung von Formkörpern nach Anspruch 1, dadurch gekennzeichnet, daß mindestens als eine Komponente ein Polyarylensulfid eingesetzt wird.

6. Zweikomponentenspritzgußverfahren zur Herstellung von Formkörpern nach Anspruch 1, dadurch gekennzeichnet, daß als Kern Polyarylensulfid verwendet wird.

7. Zweikomponentenspritzgußverfahren zur Herstellung von Formkörpern nach Anspruch 1, dadurch gekennzeichnet, daß als äußere Hülle Polyarylensulfid verwendet wird.

8. Zweikomponentenspritzgußverfahren zur Herstellung von Formkörpern nach Anspruch 1, dadurch gekennzeichnet, daß als Hülle und als Kern Polyarylensulfid eingesetzt wird.

9. Verwendung von Polyarylensulfiden im Zweikomponentenspritzguß.

10. Zweikomponentenspritzgußverfahren zur Herstellung von Formkörpern nach Anspruch 1, dadurch gekennzeichnet, daß eine Komponente ein Polyarylensulfid, die andere Komponente ein Polyphenylensulfid ist.

11. Zweikomponentenspritzgußverfahren zur Herstellung von Formkörpern nach Anspruch 1, dadurch gekennzeichnet, daß als Kern Polyarylensulfid, als Hülle ein amorpher Thermoplast eingesetzt wird.

12. Zweikomponentenspritzgußverfahren zur Herstellung von Formkörpern nach Anspruch 1, dadurch gekennzeichnet, daß als Kern Polyarylensulfid, als Hülle Polycarbonat eingesetzt wird.

13. Zweikomponentenspritzgußverfahren zur Herstellung von Formkörpern nach Anspruch 1, dadurch gekennzeichnet, daß als Kern Polyarylensulfid, als Hülle Polyestercarbonat eingesetzt wird.